# EUROPÄISCHE PATENTSCHRIFT

(11) **EP 1 593 424 B1**
(45) Veröffentlichungstag und Bekanntmachung des Hinweises auf die Patenterteilung: **30.03.2011**
(21) Anmeldenummer: 05008864.0
(22) Anmeldetag: 22.04.2005
(51) Int. Cl.: B01J 2/16

(54) **Verfahren zur Verkapselung flüchtiger oxidationsempfindlicher Substanzen sowie von Duft- und Geschmacksstoffen in Granulatform**
Process for encapsulation of substances sensitive to oxidation as well as fragrance and flavorant compounds in granular form
Procédé d'encapsualtion des substances sensibles à l'oxydation ainsi que des agents aromatisants et parfumants en forme de granules

(30) Priorität: 05.05.2004 DE 102004022102
(43) Veröffentlichungstag der Anmeldung: 09.11.2005
(73) Patentinhaber: Glatt Ingenieurtechnik GmbH, D-99427 Weimar (DE)
(72) Erfinder: Jacob, Michael, 99427 Weimar (DE); Rümpler, Karlheinz, Dr., 99425 Weimar (DE)
(74) Vertreter: Maucher, Wolfgang

(56) Entgegenhaltungen:
- WO-A-2004/101132
- WO-A-2004/108911
- DE-A1- 10 146 778
- DE-C1- 10 004 939
- US-A- 4 217 127
- US-A- 4 354 450
- US-A- 4 946 654

## Beschreibung

Die Erfindung betrifft ein Verfahren zur Herstellung von Granulaten mit den im Oberbegriff des Patentanspruches 1 genannten Merkmalen. Diese Granulate enthalten feinverkapselte Substanzen, wie Duft- und Geschmacksstoffe sowie flüchtige oder oxidationsempfindliche Materialien. Typische Substanzen im Sinne der vorliegenden Erfindung sind die unterschiedlichen Aromaten, wie Riechstoffe, Düfte sowie Mischungen daraus.

Zur Herstellung von beispielsweise diätischen Lebensmitteln ist es erforderlich, deren oxidationsempfindlichen Bestandteile (z.B. omega-3 Fettsäuren) zu verkapseln, um die Lipidoxidation zu minimieren und den Geschmack (Sensorik) zu beeinflussen. Zusätzlich dazu besitzen die Oxidationsprodukte unter Umständen ein pathogenes und toxisches Potential, dessen Ausbildung zu minimieren ist. Allgemein stellt die Verkapselung einen Schutz des eingeschlossenen Materials vor der Umgebung bzw. den Schutz des verkapselten Materials vor schädigenden Einflüssen dar.

Verkapselte Produkte werden bisher üblicherweise durch Verfahren, wie Extrusion, Einbettung in z.B. Gelatinekapseln, Sprühtrocknung, Agglomeration (Nassgranulation in Mischern bzw. Wirbelschichtagglomeration) oder in letzter Zeit verstärkt durch Wirbelschichtsprühgranulation hergestellt. Derartige Verfahren sind industriell eingeführt und in der Lage, eine bestimmte Produktqualität herzustellen. Die Produkte werden in einer Vielzahl von Industriezweigen in immer größerem Umfang genutzt. Dies betrifft sowohl die hergestellten Mengen als auch die verschiedensten Formulierungen. Eine ausführliche Technologieübersicht stellt *Kunz et al*., Chancen und Grenzen der "Mikroverkapselung in der modernen Lebensmittelverarbeitung", Chemie Ingenieur Technik 75 (Nr. 11), 2003, dar.

Im Kontext dieser Erfindung wird der Begriff Granulat verwendet, um die durch das Verfahren erzeugten Partikel allgemein zu bezeichnen. Diese Partikel stellen in der Regel sogenannte Matrix-Pellets dar. Dies bedeutet, dass der (die) zu verkapselnde(n) Wertstoff(e) in einer Trägermatrix eingebettet sind. Weiterhin können die zu verkapselnden Substanzen auch bei Zugabe eines Pulvers als Trägerstoff physikalisch eingeschlossen werden. In diesem Fall entstehen Partikel mit einer bestimmten Porosität durch Agglomeration.

In der Regel liegen die Formulierungen in flüssiger Form vor. In der letzten Zeit werden Granulate als Handelsform von Anwendern oder von der weiterverarbeitenden Industrie immer mehr bevorzugt. Die Granulate zeichnen sich durch vorteilhafte Eigenschaften wie beispielsweise leichte Dosierbarkeit, sehr gute Fließeigenschaften, homogene innere Struktur, hohe Partikeldichte, Staubfreiheit sowie eine gleichmäßige und geschlossene Oberfläche aus.

Bedingt durch die Eigenschaften der zu verkapselnden Substanzen, erweist sich die Granulatform als vorteilhafte Handelsform.

Zur Überführung flüssiger Formulierungen in eine Partikelform stellt die Sprühtrocknung eine der technisch einfachsten Möglichkeiten dar. Nachteilig bei der Sprühtrocknung ist, dass sehr große Apparatevolumina benötigt werden und das pulverförmige Produkt einen beträchtlichen Staubanteil enthält. Dieser Staubanteil erfordert einen deutlichen Mehraufwand an Anlagentechnik zur Entstaubung, Entlüftung und zur Wiederverwertung der Stäube und führt zu einer breiten Korngrößenverteilung sowie zu nicht gleich bleibenden Oberflächeneigenschaften der Teilchen. Diese Ungleichförmigkeit verringert in nachfolgenden Verarbeitungsschritten die Handhabbarkeit, wie z.B. die Dosiergenauigkeit und das Verbackungs- und das Fließverhalten. Weiterhin wird das nachfolgende Aufbringen von Überzügen (beispielsweise durch Wirbelschicht- oder Wurster-Coating) erschwert. Weiterhin stellt sich oft nachteilig dar, dass durch Sprühtrocknung hergestellte Partikel häufig innen hohl sind bzw. zerklüftete Oberflächen haben. Dies begrenzt die Schüttdichte der Produkte (z.B. *Drusch et al*., "Untersuchungen zur Stabilität von mikroverkapseltem Fischöl", 12./13. Februar 2004, GDL-Tagung "Verkapseln, Mikroverkapseln, Coaten", Jena).

Ein weiteres mögliches Verfahren zur Herstellung zur Verkapselung stellt die Aufbaugranulation in der Wirbelschicht dar, wie es in DE 199 56 604 A1 veröffentlicht wurde. Hier wird ein Prozess dargestellt bei dem die flüssige Formulierung in eine Wirbelschicht durch Sprühdüsen eingedüst wird. Der im Prozess entstehende Staub wird von der Abluft getrennt und dem Granulationsprozess als Keim wieder zugeführt. Die entstehenden Granulate werden unter Verwendung eines oder von mehreren im Anströmboden des Wirbelschichtapparates angebrachten Gegenstromsichtern aus dem Prozess entnommen. Die Größe der ausgetragenen Granulate kann durch Einstellung der Sichtgasmenge eingestellt werden. Optional können die Granulate auch zusätzlich beschichtet werden. Das Verfahren wendet einen Wirbelschicht-Prozess gemäß EP-A-0163836 und EP-A-0332929 an.

Der beschriebene Wirbelschichtprozess zeichnet sich dadurch aus, dass zur gleichmäßigen Verteilung des zur Fluidisation und Trocknung benötigten Prozessgases ein Anströmboden über den gesamten Querschnitt des Wirbelschichtapparates angebracht ist. Die zum Einbringen der Flüssigkeit genutzten Sprühdüsen sprühen vertikal nach oben und sind direkt im Anströmboden integriert (EP-A-0332929) oder werden in Höhe des Anströmbodens von einem Sichter umgeben (EP-A-0163836). Die für den Prozess benötigten Granulationskeime werden durch teilweise Sprühtrocknung der eingedüsten Flüssigkeit durch teilweise Nichtüberdeckung (Hindurchsprühen) der Sprühdüsen mit dem Wirbelschichtmaterial produziert. Die Wirbelschichtmasse wird durch einen Gleichgewichtszustand zwischen sprühgetrockneten Keimen und durch den Sichtvorgang zurückgeführtem Unterkorn sowie dem Granulataustrag gebildet. Eine Abtrennung von zu großen Granulaten gibt es nicht.

Bedingt durch das Einbringen der Flüssigkeit werden die in der Wirbelschicht enthaltenen Teilchen im bedüsten Bereich mit der Flüssigkeit benetzt, und es findet eine Trocknung des Flüssigkeitsfilmes auf der Teilchenoberfläche statt. Im restlichen Bereich der Wirbelschicht findet außerhalb der Düsen keine Trocknung von im wesentlichen oberflächlich befeuchteten Teilchen statt. Statt dessen wird nur ein geringer Anteil an in den Poren der Teilchen enthaltenen Feuchtigkeit verdampft, was zu einem Ansteigen der (mittleren) Partikeltemperatur führt. Eine Zuführung von erhitzten Prozessgasen ist jedoch auch außerhalb des Sprühbereiches der Düsen in herkömmlichen Wirbelschichten notwendig, um die Partikel im Apparat zu durchmischen und ständig Teilchen in den Bedüsungsbereich zu befördern. Da die Verkapselung z.B. flüchtiger Komponenten temperaturabhängig ist, kann mit diesen bekannten Verfahren keine optimale Ausbeute des zu verkapselnden Stoffes oder Stoffgemisches erzielt werden. Außerdem können Temperaturungleichverteilungen im Herstellungsprozess nicht vermieden werden.

Aufgabe der Erfindung ist es, ein Verfahren zur Herstellung von Granulaten zu schaffen, bei dem die Teilchen kontinuierlich oder chargenweise unter weitester Vermeidung von Temperaturungleichverteilungen im Herstellungsprozess und bei Erhöhung der Ausbeute hergestellt werden können. Gleichzeitig soll die Kontrollierbarkeit der Granulation bei der Herstellung verbessert werden.

Diese Aufgabe wird erfindungsgemäß durch die kennzeichnenden Merkmale des Patentanspruches 1 gelöst.

Erfindungsgemäß erfolgt die Herstellung von Partikeln durch Sprühgranulation durch eine Verknüpfung zwischen den thermischen Bedingungen in der Sprühzone und den Temperaturbedingungen im übrigen Bereich der Wirbelschicht. Im erfindungsgemäßen Prozess wird dies dadurch erreicht, dass die Zuführung des erhitzten Prozessgases zur Trocknung ausschließlich im Bedüsungsbereich erfolgt. Die sichere Zuführung von Teilchen in den Bedüsungsbereich hinein erfolgt durch die spezielle geometrische Gestaltung des Apparates unter Nutzung der Schwerkraft.

Der Vorteil der erfindungsgemäßen Lösung besteht darin, dass die Herstellungsbedingungen an die herzustellenden Materialeigenschaften angepasst werden. Temperaturungleichverteilungen werden weitestgehend vermieden, wodurch auch eine Steigerung der Ausbeute erreicht wird.

Weitere vorteilhafte Ausgestaltungen sind in den Unteransprüchen beschrieben, sie werden in der Beschreibung zusammen mit ihrer Wirkung erläutert.

Die Erfindung wird nachfolgend anhand eines Ausführungsbeispiels näher erläutert. In der dazugehörigen Zeichnungen ist schematisch eine Anlage zur Durchführung des erfindungsgemäßen Verfahrens dargestellt.

Die zur Trocknung der herzustellenden Granulate erforderliche Menge an erwärmtem Prozessgas 10 (in der Regel erhitzte Luft oder auch Stickstoff) wird einer Zuluftkammer 17, mit vorzugsweise rechteckigem Querschnitt 9 und begrenzenden Seitenwänden 5, zugeführt. In der Zuluftkammer 17 verteilt sich das Prozessgas 10 und tritt über Spaltöffnungen 1 in den Prozessraum 8 in Form von Gasstrahlen 2 ein. Der vorzugsweise horizontal in den Spalt 1 eintretende Prozessgasstrom wird durch das Umlenkteil 3 vorzugsweise nach oben in den Prozessraum 8 hinein umgelenkt und strömt als eine Art Freistrahl in den Apparat hinein. Im weiteren kann sich der Apparatequerschnitt optional in der Expansionszone 14 vergrößern, so dass sich die Geschwindigkeit der Prozessgasströmung nach oben hin stetig verringert. Das Gas verlässt den Apparat als Abgas 11 oberhalb der Expansionszone 14 über das Abluftteil 19, in das optional ein Entstaubungssystem (z.B. Filterpatronen oder Textilfilterelemente) integriert werden kann.

Im Prozessraum 8 befindet sich eine Menge an Partikeln, die durch den Prozessgasstrahl nach oben hin mitgerissen werden. Im oberen Bereich des Prozessraumes 8 sowie in der darüber befindlichen Expansionszone 14 nimmt die Gasgeschwindigkeit ab, so dass die aufwärts strömenden Teilchen seitlich aus dem Gasstrahl 23 heraustreten und in den Prozessraum 8 zurückfallen. Der Prozessraum 8 wird im unteren Bereich von geneigten Seitenwänden 29 begrenzt. Bedingt durch diese Seitenneigung werden die Teilchen unter Wirkung der Schwerkraft über die Rücklaufzone 24 in Richtung des Gaseintrittsspaltes 1 befördert, wo sie anschließend wieder vom Prozessgas in den Prozessraum 8 mitgerissen werden.

Durch diesen Mechanismus bildet sich eine sehr gleichförmige Feststoffzirkulation 15 bestehend aus einer Aufwärtsströmung und einem Rücklauf in Richtung des Prozessgaseintrittes. Dadurch liegt auch bei sehr geringen Mengen an Teilchen im Prozessraum 8 in der Kernzone oberhalb des Umlenkteiles 3 eine hohe Partikeldichte vor. In diesem Bereich werden ein oder mehrere Sprühdüsen 7 angeordnet, die gleichgerichtet zum Prozessgasstrahl nach oben sprühen und zum Einbringen der flüssigen Formulierung dienen.

Durch die hohe Partikelbeladung in der Kernzone ergeben sich in der Bedüsungszone 22 sehr vorteilhafte Bedingungen für den Wärme- und Stoffübergang. Weiterhin wird erreicht, dass sich die Flüssigkeit weitestgehend an den Teilchen abscheidet und diese somit gleichmäßig an den Partikeloberflächen benetzt werden. Das gleichmäßige Benetzen bei gleichzeitiger hohen Feststoffzirkulation zwischen Bedüsungsbereich und Rücklaufzone 24 bewirkt, das ein sehr gleichmäßiger Flüssigkeitsfilm gebildet wird. Durch den Trocknungsprozess verdampft die Flüssigkeit und verlässt mit dem Abgas 11 den Apparat. Der in der Formulierung enthaltene Feststoff verbleibt auf der Teilchenoberfläche. Dadurch wachsen die Granulate sehr gleichförmig und homogen, was auch ohne die Verwendung spezieller Klassiereinrichtungen (z.B. Zick-Zack-Sichter) zu einer sehr engen Korngrößenverteilung des Produktes führt.

Das Prozessgas kann einen Teil der Partikel sowie Feingut und Stäube als feststoffbeladene Abluft 20 aus dem Prozessraum 8 ausgetragen. Zur Abscheidung dieser Teilchen kann das im Abluftteil 19 optional integrierte Filtersystem oder dem Apparat nachgeschaltete Entstaubungsanlagen verwendet werden. Im Falle einer integrierten Entstaubungsanlage 25 können beispielsweise Druckluftimpulse 18 genutzt werden, um die zurückgehaltenen Partikel als abgetrennter Feststoff 21 in den Prozessraum 8 zurückzuführen.

Im Vergleich zu Wirbelschichtapparaten mit integrierten Filteranlagen wird die Staubrückführung dadurch erleichtert, dass die aufwärts gerichtete Prozessgasströmung im wesentlichen örtlich begrenzt ist und somit die zurückzuführenden Teilchen außerhalb des Gasstrahles sicher absinken können. Durch die Sogwirkung in der Nähe des Gaseintrittsspaltes 1 wird dieser Mechanismus zusätzlich gefördert. Alternativ können von der Abluft abgeschiedene Teilchen in den Prozessraum 8 zurückgeführt werden. Dazu können im unteren Bereich der geneigten Seitenwände 29 verschiedenartigste Zuführungen 26 angeordnet sein. Bedingt durch die hohe Geschwindigkeit des Prozessgasstrahls in der Nähe des Gaseintrittsspaltes 1 werden die feinen Partikel angesaugt und der Bedüsungszone 22 zugeführt, wo diese mit Flüssigkeit benetzt werden und am Wachstumsprozess teilnehmen.

Optional eingebaute Leitbleche 16 stützen den Gasstrahl, verstärken den Sogeffekt und verbessern die Zuführung der Feststoffe in der Bedüsungszone 22 hinein. Eventuell auftretende Agglomerationseffekte werden minimiert, da im Bedüsungsbereich sehr hohe Strömungsgeschwindigkeiten und somit höhere Trennkräfte als in Wirbelschichten auftreten. Dadurch werden Teilchen separiert und wachsen zu sehr kugeligen Granulaten.

Das Strömungsprofil des Prozessgases im Prozessraum 8 bewirkt weiterhin, dass von der optional integrierten Filteranlage in den Prozessraum zurückgeführte Feinpartikel nicht in die Bedüsungszone 22 zurückfallen. Dadurch wird das Verkleben von Feinpartikeln und daraus folgende Agglomeratbildungsprozesse unterbunden.

Zur kontinuierlichen Prozessführung kann der Apparat mit optional unterschiedlichen Eintragsystemen 13 für Feststoffe ausgerüstet werden. Dadurch können beispielsweise Partikel dem Prozess zugeführt werden, die durch Zerkleinerung von beispielsweise (zu großen) Granulaten gewonnen werden können oder/und aus zu kleinen Granulaten bestehen. Diese Teilchen dienen dann als Granulationskeime oder als Startfüllung zur Verkürzung der Inbetriebnahmezeit. Außerdem können hier Additive, Trägerstoffe oder andere Hilfsstoffe in fester Form in den Prozess eingeschleust werden, die in die Granulate eingebettet werden sollen.

Weiterhin kann der Apparat mit Austragsorganen 4 versehen werden, um Partikel aus dem Prozessraum 8 entnehmen zu können. Dies kann beispielsweise durch einen Überlauf oder durch ein volumetrisches Austragsorgan (z.B. eine Zellenradschleuse) oder auch durch einen Schwerkraftsicher (z.B. einen mit Sichtgas beaufschlagten Zick-Zack-Sichter oder einen Steigrohrsichter) erfolgen.

Optional können mechanische Aggregate 27 im Prozessraum 8, jedoch vorzugsweise im Bereich der Rücklaufzone 24 an den geneigten Wänden angebracht werden, um durch Zerkleinerung ausreichend Feinmaterial als Keime für den Granulatbildungsprozess zu erzeugen. Weiterhin kann die Rücklaufzone 24 optional zur Positionierung von Beheizungen oder anderen Wärmeübertragungseinrichtungen 28 genutzt werden. Beispielsweise kann die Apparatewand doppelwandig ausgeführt sein, um diese beispielsweise unter Nutzung von flüssigen oder gasförmigen Wärmeträgern zur Beheizung oder Kühlung zu verwenden. Alternativ könnten auch Mikrowellenheizer genutzt werden, um die Partikel in der Rücklaufzone 24 nachzutrocknen oder vorzuwärmen.

Im Prozessraum 8 oder in den darüber liegenden Apparateteilen, der Expansionszone 14 und dem Abluftteil 19, können optional Sprühdüsen 6 angeordnet werden, die vorzugsweise nach unten aber auch teilweise nach oben sprühen. Hier kann ebenfalls die flüssige Formulierung eingedüst werden, um beispielsweise durch Sprühtrocknung im Apparat Granulationskeime zu erzeugen. Alternativ können über einige der Sprüheinrichtungen 6 und 7 Additive oder andere Komponenten in flüssiger Form eingesprüht und somit in die Granulatstruktur homogen eingebettet werden. Wenn die Sprühdüsen 7 die heißgasbeaufschlagte Zuluftkammer 17 passieren, können optional die flüssigkeitsführenden Teile mit Isolationen oder unterschiedlichen Kühlsystemen 12 versehen werden, um Schädigungen an der flüssigen Formulierung zu unterbinden.

Als weiterer Vorteil des erfindungsgemäßen Prozesses ist der sehr einfache Aufbau zu nennen, der eine hohe Betriebssicherheit und Störungsunempfindlichkeit mit sehr guter Reinigbarkeit verbindet. Somit werden verbesserte Produktionsbedingungen insbesondere hinsichtlich der Hygieneanforderungen bei Produktwechsel bei biologischen Stoffen geschaffen.

### Beispiele:

Die Erfindung wird anhand von Anwendungsbeispielen veranschaulicht, ohne dadurch in irgendeiner Weise eingeschränkt zu werden.

### Beispiel 1: Verkapselung eines Parfümöles

Eine flüssige Formulierung wurde gemäß nachstehender Herstellungsvorschrift hergestellt:
- 0,21 kg Soyafibre S mit 1,2 kg Maltodextrin im Rührbehälter zur Mischung I vermischen,
- 5,0 kg Wasser mit 2,6 kg Maltodextrin im Rührbehälter zur Mischung II vermischen,
- Mischung I und II zur Mischung III vermischen,
- 1,5 kg Parfümöl in Mischung III voremulgieren mit Turbinenrührer,
- alles zusammen im Hochdruckemulgator bei 250 bar / 25 bar homogenisieren.

Die Formulierung hatte einen Gesamt-Trockenstoffanteil von etwa 51 Massenprozent und wurde in einen Apparat eingesprüht, der durch den nachfolgend beschriebenen Aufbau gekennzeichnet ist. Der Prozessraum besteht aus einem rechteckigen Querschnitt und hat oberhalb der geneigten Seitenwände eine Querschnittsfläche von 0,15x0,2=0,03 m² und eine Höhe von etwa 1 m. Die Zufuhr des auf etwa 90 °C erwärmten Prozessluftstromes von etwa 170 m³/h erfolgte über 2 längs durch den Apparat verlaufende Gaszuführungsspalte. Die flüssige Formulierung wurde über eine druckluftbeaufschlagte, vertikal nach oben sprühende Zweistoffdüse in den Prozessluftstrahl mit einem Massenstrom von etwa 30 g/min eingesprüht. Zu Beginn des Prozesses befanden sich keine Partikel im Prozessraum. Somit wurde die Anlage ohne eine Startfüllung in Betrieb gesetzt. Alternativ kann der Prozess auch mit einer Startfüllung gestartet werden. In diesem Fall wurde beispielsweise microcrystalline Cellulose verwendet. Im Prozessraum befanden sich im stationären Zustand bei kontinuierlicher Produktion etwa 75 g an Partikeln. Durch den Verdampfungsprozess kühlte sich die Prozessluft ab und verließ mit etwa 50 °C den Apparat. Die Entstaubung der Abluft erfolgte durch einen dem Apparat nachgeschalteten Zyklon, und der abgeschiedene Feststoff wurde in den Prozessraum in Spaltnähe als Keimematerial zugeführt. Die Entnahme von Granulaten aus dem Prozessraum erfolgte stirnseitig unter Verwendung eines Zick-Zack-Sichters. Die im Sichter abgetrennten Feinanteile wurden durch die Sichtluft in den Prozessraum zurückgeblasen. Das entnommene Granulat hat eine unverfestigte Schüttdichte von 500 g/l und folgende Korngrößenverteilung (Siebanalyse):

| | |
|---|---|
| > 1000 µm | 0,2 Mass.-% |
| 630...1000 µm | 0,7 Mass.-% |
| 400...630 µm | 19,7 Mass.-% |
| 0 µm | 59,7 Mass.-% |
| 100...315 µm | 19,7 Mass.-% |
| 0...100 µm | 0 Mass.-% |

Die mittlere Materialverweilzeit im kontinuierlichen Betrieb der Anlage betrug in diesem Beispiel etwa 5 Minuten.

### Beispiel 2: Verkapselung von Fischöl

Es wurde eine flüssige Formulierung entsprechend folgender Rezeptur hergestellt:
- 0,25 kg Soyafibre S mit 1,0 kg Maltodextrin im Rührbehälter zur Mischung I vermischen,
- 6,25 kg Wasser mit 3,2 kg Maltodextrin im Rührbehälter zur Mischung II vermischen,
- Mischung I und II zur Mischung III vermischen,
- 1,5 kg Fischöl in Mischung III voremulgieren mit Turbinenrührer,
- alles zusammen im Hochdruckemulgator bei 250 bar / 25 bar homogenisieren.

Die Formulierung hatte einen Gesamt-Trockenstoffanteil von etwa 48 Massenprozent und wurde in einen Apparat eingesprüht, der durch den nachfolgend beschriebenen Aufbau gekennzeichnet ist. Der Prozessraum besteht aus einem rechteckigen Querschnitt und hat oberhalb der geneigten Seitenwände eine Querschnittsfläche von 0,15x0,2=0,03 m² und eine Höhe von etwa 1 m. Die Zufuhr des auf etwa 70 °C erwärmten Prozessluftstromes von etwa 160 m³/h erfolgte über 2 längs durch den Apparat verlaufende Gaszuführungsspalte. Die flüssige Formulierung wurde über eine druckluftbeaufschlagte vertikal nach oben sprühende Zweistoffdüse in den Prozessluftstrahl mit einem Massenstrom von etwa 25 g/min eingesprüht. Zu Beginn des Prozesses befand sich microcrystalline Cellulose als Startfüllung im Prozessraum. Alternativ wurde der Prozess auch unter Verwendung einer arteigenen Startfüllung in Betrieb gesetzt. Diese bestand aus 120 g Materialfüllung des Prozessraumes zum Ende des vorausgegangenen Versuches. Durch den Verdampfungsprozess kühlte sich die Prozessluft ab und verließ mit etwa 50 °C den Apparat. Die Entstaubung der Abluft erfolgte durch einen dem Apparat nachgeschalteten Zyklon, und der abgeschiedene Feststoff wurde in den Prozessraum in Spaltnähe als Keimematerial zugeführt. Die Entnahme von Granulaten aus dem Prozessraum erfolgte stirnseitig unter Verwendung eines Zick-Zack-Sichters. Die im Sichter abgetrennten Feinanteile wurden durch die Sichtluft in den Prozessraum zurückgeblasen. Das entnommene Granulat hat eine unverfestigte Schüttdichte von 700 g/l und folgende Korngrößenverteilung (Siebanalyse):

| | |
|---|---|
| > 1000µm | 0,6 Mass.-% |
| 630...1000 µm | 26,9 Mass.-% |
| 400...630 µm | 69,4 Mass.-% |
| 315...400 µm | 3,1 Mass.-% |
| 1 00...31 5 µm | 0 Mass.-% |
| 0...100 µm | 0 Mass.-% |

Die auf der Trockenstoffbasis berechnete mittlere Materialverweilzeit betrug etwa 10 Minuten.

Zusammenfassend ist also folgendes festzustellen:

Die Erfindung betrifft ein Verfahren zur Herstellung von Granulaten.

Aufgabe der Erfindung ist es, ein Verfahren zur Herstellung von mindestens einen verkapselten Wertstoff enthaltenen Granulaten zu schaffen, bei dem die Granulate kontinuierlich oder chargenweise unter weitester Vermeidung von Temperaturungleichverteilungen im Herstellungsprozess und bei Erhöhung der Ausbeute an Aktivität hergestellt werden können. Gleichzeitig soll die Kontrollierbarkeit der Granulation bei der Herstellung verbessert werden.

Erfindungsgemäß erfolgt die Herstellung von Granulaten durch eine Verknüpfung zwischen den thermischen Bedingungen in der Sprühzone und den Temperaturbedingungen im übrigen Bereich der Wirbelschicht. Im erfindungsgemäßen Prozess wird dies dadurch erreicht, dass die Zuführung des erhitzten Prozessgases zur Trocknung ausschließlich im Bedüsungsbereich erfolgt. Die sichere Zuführung von Teilchen in den Bedüsungsbereich hinein erfolgt durch die spezielle geometrische Gestaltung des Apparates unter Nutzung der Schwerkraft.

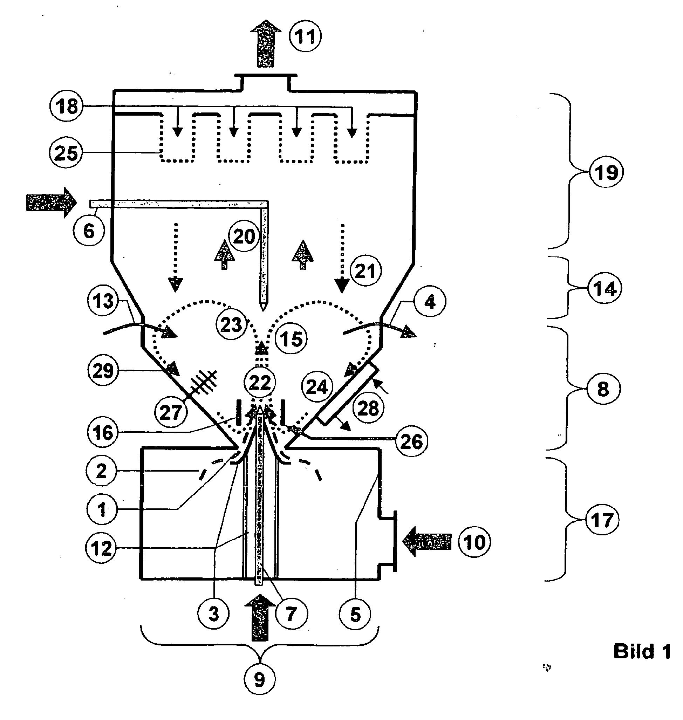

## Patentansprüche

1. Verfahren zur Herstellung von Granulaten,
**wobei**
a. eine flüssige Formulierung über Sprüheinrichtungen in Form von ein oder mehreren Sprühdüsen (7) in einen feststoffbeladenen Gasstrahl (2) eingedüst wird,
b. die flüssige Formulierung mindestens einen zu verkapselnden Wertstoff ausgewählt aus Duftstoffen, Geschmacksstoffen, flüchtigen Stoffen und oxidationsempfindlichen Bestandteilen von Lebensmitteln, außer Enzymen, enthält,
c. die mit Flüssigkeit benetzten Materialteilchen, auch als Teilchen oder Partikel bezeichnet, im erwärmten Gasstrahl (2) einem Trocknungs- und Granulationsprozess unterzogen werden,
d. die Teilchen nach einer Verweilzeit vom Gasstrahl (2) getrennt und in einen Prozess- oder Reaktionsraum zurückgeführt werden,
e. Feinpartikel, Stäube und vom Prozessgas (10) mitgerissene Teilchen abgeschieden werden und dem Prozess als Keimematerial für den Granulatbildungsprozess wieder zugeführt werden,
f. wobei die zur Trocknung der herzustellenden Granulate erforderliche Menge an erwärmtem Prozessgas (10) einer Zuluftkammer (17) mit eckigem Querschnitt und begrenzenden Seitenwänden (5) zugeführt wird, in der sich das Prozessgas (10) verteilt und über langgestreckte Spaltöffnungen (1) in den Prozessraum (8) in Form von Gasstrahlen (2) eintritt und durch ein Umlenkteil (3) nach oben in den Prozessraum (8) hinein umgelenkt wird und als eine Art Freistrahl in den Prozessraum (8)eines zugehörigen Apparates hineinströmt, wobei sich der Apparatequerschnitt in einer Expansionszone (14) vergrößert, so dass sich die Geschwindigkeit der so gebildeten Prozessgasströmung nach oben hin stetig verringert, das Prozessgas (10) den Apparat als Abgas 11 oberhalb der Expansionszone (14) über ein Abluftteil (19) verlässt, eine Menge an Partikeln durch den Gasstrahl (2) nach oben mitgerissen wird, und wobei im oberen Bereich des Prozessraums (8 () sowie der darüber liegenden Expansionszone (14) die Gasgeschwindigkeit abnimmt, so dass die aufwärts strömenden Teilchen seitlich aus dem Gasstrahl (23) heraustreten und in den Prozessraum (8) zurückfallen, die Teilchen durch Schwerkraft über geneigte Flächen in Form von geneigten Seitenwänden (29) über eine Rücklaufzone (24) in Richtung des Gaseintrittspaltes (1) befördert werden und so dem Gaseintrittsbereich zugeführt werden, wo sie anschließend wieder vom Prozessgas (10) in den Prozessraum (8) mitgerissen werden; wodurch sich eine sehr gleichförmige Feststoffzirkulation (15) bestehend aus einer Aufwärtsströmung und einem Rücklauf in Richtung des Prozessgaseintrittes ergibt, wobei die unter (a) genannten Sprühdüsen in einer Kernzone mit hoher Partikeldichte oberhalb des Umlenkteils (3) angeordnet sind und gleichgerichtet zum Gasstrahl (2) nach oben sprühen, wobei sich die Flüssigkeit aus der flüssigen Formulierung weitestgehend an den Teilchen abscheidet unter Bildung eines gleichmäßigen Flüssigkeitsfilms und durch den Trocknungsprozess die Flüssigkeit verdampft und mit dem Abgas (11) den Apparat verlässt, während der in der Formulierung enthaltene Feststoff auf der Teilchenoberfläche verbleibt;
g. wobei der Granulationsprozess kontinuierlich oder chargenweise durchgeführt wird.

2. Verfahren nach Anspruch 1,
**dadurch gekennzeichnet, dass**
die Granulate über Austragsorgane (4) aus dem Prozessraum entnommen werden.

3. Verfahren nach Anspruch 1,
**dadurch gekennzeichnet, dass**
die Granulate über volumetrische Austragsorgane aus dem Prozessraum entnommen werden.

4. Verfahren nach Anspruch 1, **dadurch gekennzeichnet, dass** der Apparat mit Eintragssystemen (13) für Feststoffe ausgerüstet ist, durch die Partikel dem Prozess zugeführt werden, die durch Zerkleinerung von zu große Granulaten gewonnen werden und/oder aus zu kleinen Granulaten bestehen, die als Granulationskeime oder Startfüllung zur Verkürzung der Inbetriebnahmezeit dienen, wobei hier auch Additive, Trägerstoffe oder andere Hilfsstoffe in fester Form in den Prozess eingeschleust werden können, die in die Granulate eingebettet werden sollen.

5. Verfahren nach einem der Ansprüche 1 bis 4,
**dadurch gekennzeichnet, dass**
die mittlere Verweilzeit der Granulate im Prozessraum < 15 Minuten beträgt.

## Claims

1. Method of producing granulates, wherein
a. a liquid formulation is sprayed into a solids-charged gas current (2) using spray devices in the form of one or more spray nozzles (7),
b. the liquid formulation contains at least one substance of value that is to be encapsulated, selected from among scents, flavourings, volatile substances and oxidation-prone constituents of foodstuffs, other than enzymes,
c. the particles of material wetted with liquid, also referred to as particles, are subjected to a drying and granulation process in the heated gas current (2),
d. after a delay time the particles are separated from the gas current (2) and recycled into a process or reaction chamber,
e. fine particles, dust and particles picked up by the process gas (10) are precipitated and recycled into the process as nucleus material for the granulate forming process,
f. wherein the quantity of heated process gas (10) needed to dry the granulates being produced is supplied to a supply air chamber (17) of angular cross-section with side walls (5) delimiting it, in which the process gas (10) is distributed and enters through elongate slot-like apertures (1) into the process chamber (8) in the form of gas currents (2) and is deflected upwards into the process chamber (8) by a deflecting member (3) and flows, as a kind of free stream, into the process chamber (8) of an associated apparatus, the cross-section of the apparatus increasing in an expansion zone (14), so that the speed of the flow of process gas thus formed decreases constantly in the upward direction, the process gas (10) leaves the apparatus as exhaust gas (11) above the expansion zone (14) via an exhaust air portion (19), a quantity of particles is swept upwards by the gas current (2), and in the upper region of the process chamber (8) and the expansion zone (14) located above it the gas velocity decreases, so that the particles flowing upwards move laterally out of the gas current (23) and drop back into the process chamber (8), the particles are conveyed by gravity over sloping surfaces in the form of sloping side walls (29) through a backflow zone (24) towards the gas inlet slot (1) and are thus conveyed to the gas inlet region, where they are again picked up by the process gas (10) and swept into the process chamber (8); as a result of which there is a very uniform circulation of solids (15) consisting of an upward flow and a backflow towards the process gas inlet, the spray nozzles mentioned under (a) being arranged in a core zone with a high particle density above the deflecting member (3) and spraying upwards in the same direction towards the gas current (2), the liquid from the liquid formulation being deposited primarily on the particles, forming a uniform film of liquid, and the drying process causing the liquid to evaporate and leave the apparatus with the exhaust gas (11), while the solid matter contained in the formulation remains on the surface of the particles;
g. the granulation process being carried out continuously or in batches.

2. Method according to claim 1, **characterised in that** the granulates are removed from the process chamber through discharge means (4).

3. Method according to claim 1, **characterised in that** the granulates are removed from the process chamber through volumetric discharge means.

4. Method according to claim 1, **characterised in that** the apparatus is equipped with loading systems (13) for solids through which particles are fed into the process, which are obtained by grinding up oversized granulates and/or consist of undersized granulates, which are used as granulation nuclei or as a starter load to reduce the start-up time, while additives, carriers or other adjuvants in solid form which are to be embedded in the granulates may also be fed into the process.

5. Method according to one of claims 1 to 4, **characterised in that** the average retention time of the granulates in the process chamber is < 15 minutes.

## Revendications

1. Procédé de fabrication de granulés, sachant
a. qu'au moyen de dispositifs de pulvérisation sous la forme d'une ou plusieurs buses de pulvérisation (7), on injecte une formulation liquide dans un jet de gaz (2) chargé de substances solides,
b. la formulation liquide contient au moins une substance de valeur à encapsuler, sélectionnée parmi des substances odorantes, des substances aromatiques, des substances liquides et des composants sensibles à l'oxydation de denrées alimentaires, enzymes exceptés,
c. les particules de matière imprégnées de liquide, également appelées simplement « particules », sont soumises dans le jet de gaz chauffé (2) à un processus de séchage et de granulation,
d. après un temps de séjour, les particules sont séparées du jet de gaz (2) et ramenées dans une chambre de traitement ou de réaction,
e. les particules fines, les poussières et les particules entraînées par le gaz de traitement (10) sont isolées et rapportées au processus comme matériau de germination pour le processus de formation de granulés,
f. sachant que la quantité de gaz de traitement chauffé (10) nécessaire pour le séchage des granulés à fabriquer est apportée à une chambre d'entrée d'air (17) ayant une section polygonale et des parois latérales de délimitation (5), dans laquelle le gaz de traitement (10) se répartit et pénètre via des ouvertures en forme de fentes oblongues (1) dans la chambre de traitement (8) sous la forme de jets de gaz (2), et est dévié vers le haut à l'intérieur de la chambre de traitement (8) par un élément déflecteur (3), et s'écoule à la manière d'un jet libre à l'intérieur de la chambre de traitement (8) d'un appareil associé, sachant que la section de l'appareil s'agrandit dans une zone d'expansion (14), de sorte que la vitesse du flux de gaz de traitement ainsi formé diminue constamment vers le haut, et que le gaz de traitement (10) quitte l'appareil sous forme de gaz d'évacuation (11) au-dessus de la zone d'expansion (14) par l'intermédiaire d'un élément de sortie d'air (19), et qu'une certaine quantité de particules est entraînée vers le haut par le jet de gaz (2), et sachant que la vitesse du gaz diminue dans la région supérieure de la chambre de traitement (8) ainsi que de la zone d'expansion (14) qui se trouve au-dessus, de sorte que les particules qui s'écoulent vers le haut quittent le jet de gaz (23) sur les côtés et retombent dans la chambre de traitement (8), et que les particules sont transportées par gravité, sur des surfaces inclinées sous la forme de parois latérales inclinées (29) d'une zone de retour (24), en direction de la fente d'entrée de gaz (1) et sont ainsi apportées à la zone d'entrée de gaz, où elles sont ensuite à nouveau entraînées par le gaz de traitement (10) dans la chambre de traitement (8), de sorte qu'on obtient une circulation de substances solides très uniforme (15) constituée d'un écoulement vers le haut et d'un retour en direction de l'entrée de gaz de traitement, sachant que les buses de pulvérisation mentionnées en (a) sont disposées au-dessus de l'élément déflecteur (3) dans une zone centrale présentant une densité élevée de particules et qu'elles effectuent une pulvérisation vers le haut dans le même sens en direction du jet de gaz (2), sachant que le liquide constitué de la formulation liquide se précipite dans une très large mesure sur les particules en formant un film liquide uniforme et que le liquide se vaporise du fait du processus de séchage et quitte l'appareil avec le gaz d'évacuation (11), tandis que la substance solide contenue dans la formulation reste sur la surface des particules ;
g. sachant que le processus de granulation est exécuté en continu ou par lots.

2. Procédé selon la revendication 1, **caractérisé en ce que** les granulés sont enlevés de la chambre de traitement au moyen d'organes d'évacuation (4).

3. Procédé selon la revendication 1, **caractérisé en ce que** les granulés sont enlevés de la chambre de traitement au moyen d'organes d'évacuation volumétriques.

4. Procédé selon la revendication 1, **caractérisé en ce que** l'appareil est équipé de systèmes (13) d'alimentation en substances solides par lesquels sont apportées au processus des particules qui sont obtenues par fragmentation de granulés de taille excessive et/ou qui sont constituées de granulés de taille insuffisante qui servent de germes de granulation ou de charge initiale pour réduire la durée de mise en route, sachant qu'on peut également introduire ici dans le processus des additifs, des substrats ou autres excipients sous une forme solide qui doivent être incorporés dans les granulés.

5. Procédé selon l'une des revendications 1 à 4, **caractérisé en ce que** le temps moyen de séjour des granulés dans la chambre de traitement est inférieur à 15 minutes.
